# EUROPÄISCHE PATENTSCHRIFT

(11) **EP 1 066 607 B1**
(45) Veröffentlichungstag und Bekanntmachung des Hinweises auf die Patenterteilung: **22.05.2002**
(21) Anmeldenummer: 99908759.6
(22) Anmeldetag: 01.02.1999
(51) Int. Cl.: G07F 7/10

(54) **GERÄT UND VERFAHREN ZUR GESICHERTEN AUSGABE VON WERTSCHEINEN**
DEVICE AND METHOD FOR SECURELY DISPENSING ITEMS WITH A MONETARY VALUE
APPAREIL ET PROCEDE POUR LA DISTRIBUTION SECURISEE DE BONS DE VALEUR

(30) Priorität: 23.03.1998 DE 19812648
(43) Veröffentlichungstag der Anmeldung: 10.01.2001
(73) Patentinhaber: Wincor Nixdorf GmbH & Co KG, 33106 Paderborn (DE)
(72) Erfinder: NOLTE, Michael, D-33034 Brakel (DE); WEIGOLD, Richard, D-33699 Bielefeld (DE)
(86) Internationale Anmeldenummer: DE9900271
(87) Internationale Veröffentlichungsnummer: WO9949425

(56) Entgegenhaltungen:
- EP-A- 0 461 983
- EP-A- 0 723 251
- WO-A-97/45817
- FR-A- 2 589 268
- US-A- 5 721 781

## Beschreibung

### Technisches Gebiet

Die Erfindung betrifft ein Gerät und Verfahren zur gesicherten Ausgabe von Wertscheinen.

### Stand der Technik

Geräte zur Ausgabe von Wertscheinen in Form von Banknoten sind beispielsweise als Geldausgabeautomaten bekannt.

In der DE OS 27 17 345 ist ein Auszahler gezeigt, der aus magazinierten Vorräten insbesondere Banknoten zur Ausgabe zusammenstellt. In der US 3,945,277 ist ein eigenständiges Geldausgabegerät beschrieben, bei dem Karten mit Magnetstreifen eingesetzt werden, um das zu belastende Konto und die Höchstmenge des jeweils auszugeben den Betrags zu codieren. In der US 3,675,816 wird gleichfalls ein Geldausgabeautomat beschrieben, bei dem die Daten eines maschinell lesbaren Schecks mit den Daten einer Magnetkarte verglichen werden, um eine Auszahlung zuzulassen. In der US 3,956,615 ist ein Geldausgabeautomat beschrieben, bei dem für jede Auszahlung oder Transaktion eine Kommunikation über eine Datenkommunikationseinrichtung mit einem zentralen Autorisierungsrechner erfolgt, welcher die Auszahlung gleichzeitig autorisiert und verbucht. In der EP 0 723 251 wird eine Station ( Terminal ATM ) zur Ausgabe von Geld offenbart, in der in einer Verifikations- und Authentikationsphase die Zugangsberechtigung eines eine IC-Karte verwendenden Benutzers, sowie die Berechtigung des Benutzers diese Karte zu verwenden, überprüft wird. Auch aus der US 5,721,781 ist ein Verfahren bekannt, wel ches gleichfalls zur Authentifizierung von mit IC-Karten durchzuführenden Transaktionen angewandt wird.

Allen bekannten Anordnungen ist gemeinsam, dass die Steuerung, der auch als Vereinzler bezeichnete Auszahler, die Leseeinrichtungen für Belege oder Magnetkarten usw. im Innern eines geschützten Gehäuses oder Tresors untergebracht sind, damit kein unbefugter Zugriff darauf möglich ist. Dabei muss selbstverständlich die Steuerung mit von dem Tresor geschützt werden, weil sonst eine Manipulation dahingehend möglich wäre, Geld ohne Autorisierung auszugeben. Solange die Steuerung speziell für diesen Zweck entwickelt und von geringer Komplexität und Leistungsfähigkeit ist, stellt dies kein besonderes Problem dar.

In dem Maße jedoch, wie als Steuerrechner handelsübliche Personal Computer mit entsprechend komplexen Betriebssystemen und Programmen von mehreren Megabyte Code eingesetzt werden, ist eine Sicherheitskontrolle der Software extrem aufwendig. Zudem ist der eigentlich problemlose Austausch von Baugruppen immer mit einer Öffnung des Tresors verbunden, die in der Regel nur unter spezieller Aufsicht erfolgen darf.

Aufgabe der Erfindung ist es daher, eine Station zur Ausgabe von geschützt abgelegten Wertscheinen anzugeben, bei der Komponenten so angeordnet sind bzw. betrieben werden, daß die Ablaufsteuerung sich überwiegend außerhalb des Tresors, der die Wertscheine schützt, befinden kann.

### Darstellung der Erfindung

Die Erfindung wird in den unabhängigen Ansprüchen 1 und 16 angegeben und löst die Aufgabe dadurch, daß eine Überwachung derart vorgesehen ist, daß der (Maximal-) Betrag jeder Auszahlung unabhängig von der restlichen Steuerung limitiert wird, indem beim Überschreiten des jeweils autorisierten Betrags die Ausgabe gesperrt wird.

Es handelt sich also um ein Gerät und Verfahren zur gesicherten Ausgabe von Wertscheinen, wobei eine signierte Freigabenachricht einen Gesamtwert der auszugebenden Wertscheine enthält, ein Verifikator die Signatur prüft, der Gesamtwert mit der Summe der Werte der auszugebenden Wertscheine verglichen wird und aus dem Vergleich und Einbeziehung der Prüfung der Signatur ein Sperrsignal für die Ausgabe aus einer Ausgabeöffnung heraus erzeugt wird, solange die Signatur ungültig oder der Gesamtwert kleiner als die Summe ist.

Dabei wird zur Vereinfachung der Begriff "Wertschein" stellvertretend für Gegenstände verwendet, denen eine Wertzahl zugeordnet ist; eingeschlossen sollen also auch Münzen, Pfandmarken, Eintrittskarten usw. sein, wie weiter hinten noch erläutert wird.

Weitere Merkmale und Vorteile der Erfindung ergeben sich aus der folgenden Beschreibung, welche in Verbindung mit den beigefügten Figuren die Erfindung an Hand eines Ausführungsbeispiels erläutert.

### Kurzbeschreibung der Zeichnungen

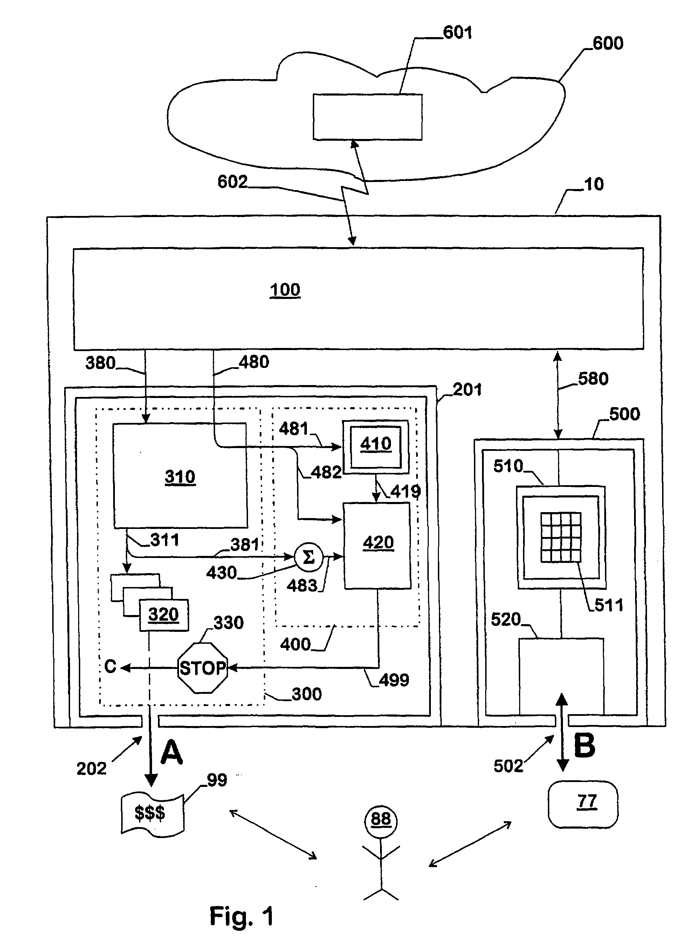

Es zeigen
- Fig. 1: ein Blockdiagramm eines Geräts zur Ausgabe von Wertscheinen.

### Beschreibung einer Ausführungsform der Erfindung

In Fig. 1 ist ein Gerät 10 zur Ausgabe von Wertscheinen dargestellt. Es enthält eine Steuerung 100, die die Abläufe in dem Gerät initiiert und überwacht. Sie ist auch für die allgemeine Kommunikation mit dem Benutzer zuständig und kann für diese Zwecke mit einem Bildschirm und einer Tastatur oder einem Zeigegerät (Maus) verbunden sein. Diese nicht gezeigten Kommunikationseinrichtungen dienen beispielsweise dazu, in einem Dialog Art und Menge der auszugebenden Wertscheine und, sofern sinnvoll, die Stückelung oder andere Angaben aufzunehmen.

Über eine Verbindung 380 ist die Steuerung 100 mit einem Ausgeber 310 verbunden, der aus einem (nicht gezeigten) Vorrat eine Anzahl von Wertscheinen 320 zur Ausgabe in Richtung des Pfeiles A bereitstellen und über eine Ausgabeöffnung 202 ausgeben kann. Der Ausgeber 310 ist eine Kombination von Mechanik und Elektronik, wie sie beispielsweise in der erwähnten DE OS 27 17 345 dargestellt ist. Die Steuerung 100 gibt über die Verbindung 380 Aufträge an den Ausgeber 310. Solche Aufträge umfassen insbesondere die Auswahl einer Anzahl von Wertscheinen aus einem bestimmten Magazin, deren Bereitstellung und finale Ausgabe aus der Ausgabeöffnung 202 heraus. Diese Anordnung ist soweit allgemein bekannt; die weiteren in Fig. 1 innerhalb des Gehäuses 201 gezeigten Komponenten sind für die Erfindung spezifisch und werden weiter unten erläutert.

Ein überwiegend bislang benutzter Geldausgabeautomat nach dem Stand der Technik sieht ferner einen Authentisator 500 vor, der meist einen Magnet- oder Chipkartenleser 520 enthält. Eine bedienende Person 88 schiebt eine Ausweiskarte 77 in den Eingabeschlitz 502 eines Kartenlesers. Daraufhin wird die Karte 77 geprüft. Die Daten werden an ein Sicherheitsmodul 510 weitergegeben, das durch ein besonderes Gehäuse gegen Manipulationen geschützt ist. In dem Schutzbereich findet sich eine Tastatur 511 zur Eingabe einer Geheimzahl. Nach deren Eingabe sendet der Sicherheitsmodul 510 eine, meist verschlüsselte, Nachricht über die Verbindung 580. Diese wird gewöhnlich über die Steuerung 100 und eine Datenübertragungsverbindung 602 eines Netzwerks 600 an einen Autorisierungsrechner 601 geschickt. Dabei wird die Nachricht des Sicherheitsmoduls 510 von der Steuerung noch um den gewünschten Auszahlungsbetrag ergänzt, sofern dieser nicht zuvor bereits dem Sicherheitsmodul 510 mitgeteilt wurde und bereits in der verschlüsselten Nachricht enthalten ist. In dem Autorisierungsrechner 601 wird sodann eine Buchung durchgeführt und eine Antwort an die Steuerung 100 zurückgeschickt. Der die Station betreibende Anwender legt dabei fest, ob und wann die Buchungstransaktion im Autorisierungsrechner abgeschlossen ist. Üblicherweise sendet der Autorisierungsrechner 601 zunächst ein Kommando zur Bereitstellung der Wertscheine, welches bei der letztendlichen Ausgabe durch die Ausgabeöffnung 202 bestätigt wird und die Transaktion abschließt. Andere Protokolle, bei denen beispielsweise ein Storno vorgesehen ist, sind gleichfalls möglich. Ersichtlich bewirkt die Erfindung gerade eine Entkopplung von dem tatsächlich verwendeteten Protokoll, welches die Ausgabe im Detail steuert.

Im einfachsten Fall enthält die Antwort eine Angabe, daß der gewünschte Betrag gebucht ist und nunmehr ausgezahlt werden kann. Die Steuerung gibt die entsprechenden Befehle über die Verbindung 380 an den Auszahler 310, der die auszugebenden Wertscheine 320 bereitstellt (oder bereits bereitgestellt hat) und nun über die Ausgabeöffnung 202 ausgibt.

Für den Fall, dass keine Online-Verbindung 602 möglich ist, kann auch über den Sicherheitsmodul 510 eine Freigabe einer Auszahlung erfolgen. In diesem Fall werden die ausgezahlten Werte gespeichert und später an den Autorisierungsrechner 601 übermittelt.

Es ist ersichtlich, dass die Sicherheit gegen unberechtigte Auszahlungen dieser bislang benutzten Struktur insbesondere von der korrekten Funktion der Steuerung 100 abhängt, die daher zusammen mit dem Auszahler 310 in einem besonders gesicherten und meist nur mit zwei Schlüsseln nach dem "Vieraugenprinzip" zugänglichen Tresor enthalten ist. Nach dem Aufschließen des Tresors sind sowohl die Vorratsbehälter für die Wertscheine als auch die Steuerung 100 und der Auszahler 310 frei zugänglich.

Die Erfindung erlaubt es nün, die Steuerung 100 außerhalb des Tresors anzuordnen und durch wesentlich vereinfachte Mittel zu ersetzen, die insbesondere bei Änderungen der Kommunikation mit dem Benutzer, der Datenübertragungsverbindung 602 und anderen, sicherheitstechnisch irrelevanten Änderungen nicht mehr betroffen ist.

Gemäß der Erfindung ist in der Station 10 weiterhin eine Steuerung 100 vorgesehen, die jedoch nicht besonders gesichert zu sein braucht und deren Eigenschaften für die Sicherheit gegen unberechtigte Auszahlungen und damit die Erfindung unbedeutend sind. In der Station befindet sich ein Tresor 201, in dem einerseits der bekannte Auszahler 310 zusammen mit einem Vorrat an Wertscheinen enthalten ist. Dieser erhält weiterhin über die Verbindung 380 Kommandos von der Steuerung 100, die damit im wesentlichen unverändert bleiben kann.

Neu hinzugefügt sind die im Prüfmodul 400 enthaltenen Komponenten. In der bevorzugten Ausführungsform ist der Prüfmodul durch eine Chipkarte realisiert; Alternativen und Varianten sind weiter unten dargestellt.

Zum einen werden, wie bislang auch, über die Verbindung 380 Kommandos an den Auszahler gegeben, ein oder mehrere Wertscheine 320 bereitzustellen. Dabei wird ein Auszahler 310 verwendet, der die Wertzahl der Wertscheine 320 unabhängig von der Steuerung 100 zu ermitteln vermag. Dies kann dadurch geschehen, daß eine nicht gezeigte Station vorgesehen ist, die die ausgewählten Wertscheine passieren und die den Wert ermittelt. Auch kann vorgesehen sein, daß die Wertscheine in Magazinen oder anderen Speichern angeordnet sind und diese einen Speicher enthalten, der die Wertzahl der gespeicherten Wertscheine enthält und von der Bedienperson, die die Wertscheine in das Magazin fügt, eingestellt wird. Auch ist es möglich, daß zwar diese Zahlen von der Steuerung übermittelt und in dem Auszahler 310 gespeichert werden, diese Angaben aber über eine nicht dargestellte Anzeige von der den Tresor schließenden Person überprüft werden können. Ein beispielsweise durch Schließen des Tresors betätigter Schalter sperrt dann diesen Speicher gegen weitere Änderungen.

In der in Fig. 1 gezeigten Ausführungsform, werden die Werte bei der Bereitstellung von Wertscheinen 320 ermittelt und, durch die Verbindung 381 symbolisiert, an einen Summierer 430 weitergegeben. Die jeweilige Summe wird, durch die Verbindung 483 angezeigt, einem Vergleicher 420 zur Verfügung gestellt.

Ferner umfaßt die Erfindung einen Verifikator 410. Dieser wird vorzugsweise als Chipkarte ausgebildet bzw. ist in einer solchen enthalten, für die eine Fertigungstechnik bekannt und eine Anzahl von Kommunikationsprotokollen standardisiert ist. Eine Chipkarte oder ein anderer Modul mit einer Schnittstelle, einer Verarbeitungseinheit und einem internen, nicht über die Schnittstelle direkt zugänglichen Speicher hat den Vorteil, daß sie eine optimal gesicherte Ablage für einen Schlüssel bereitstellt, wenn die nachfolgend aufgeführte Signaturprüfung kryptographische Verfahren verwendet und daher einen geheimen Schlüssel benötigt.

Der Verifikator 410 erhält eine Freigabenachricht. Diese Übermittlung ist durch eine Verbindung 480 von der Steuerung 100 zu dem Verifikator 410 symbolisiert. Die Freigabenachricht wird in der Praxis meist über die Schnittstelle übermittelt, über die schon die Steuerung mit dem Auszahler 310 verbunden ist, und von diesem zum Verifikator 410 weitergereicht. Dies ist die bevorzugte Lösung, da dann die Schnittstellen lokal innerhalb des Tresors 201 verbleiben. Da jedoch der Auszahler die Freigabenachricht nicht verändert, ist strukturell eine Verbindung 480 von der Steuerung 100 zum Verifikator 410 dargestellt.

Die Erzeugung der Freigabenachricht wird weiter unten beschrieben; zunächst ist festzustellen, daß sie neben Verwaltungsinformation einen Gesamtwert enthält. Der Gesamtwert ist eine Zahl, die mit den den Wertscheinen zugeordneten Wertzahlen bzw. einer Summe davon logisch kommensurabel ist.

Die Freigabenachricht umfaßt ferner eine Signatur, um den Gesamtwert vor Verfälschung zu schützen. Diese Signatur ist vorzugsweise eine nach dem Stand der Technik kryptographisch gesicherte Signatur, z.B. ein "message authentication code", MAC, nach dem "data encryption standard", DES. Alternativ sind auch andere Verfahren, insbesondere als "public key" bezeichnete, verwendbar. Auch ist es möglich, daß die Freigabenachricht Redundanz enthält, mit DES oder einem anderen geeigneten Verfahren verschlüsselt ist und nach der Entschlüsselung die Redundanz prüfbar ist. Dieses Vorgehen sichert bekanntermaßen eine Freigabenachricht sowohl gegen Verfälschung, wie hier notwendig, als auch gegen Ausspähung. Hierbei ist der Einsatz einer Chipkarte, d.h. einer integralen Einheit mit einer Schnittstelle, einem Prozessor und Speicher, sinnvoll und bevorzugt, da in dem Speicher der notwendig geheime Schlüssel zur Signaturprüfung gut gegen Ausspähung geschützt abgelegt werden kann. Es sei aber darauf hingewiesen, daß jeglicher Modul einsetzbar ist, der die Signatur einer Nachricht zuverlässig überprüfen kann; die Auswahl erfolgt nach Abwägung von Kosten, Handhabung und angestrebter Sicherheit.

Zeigt die Signatur an, daß die Nachricht unverfälscht ist, so kann die darin enthaltene Gesamtsumme entnommen und dem Vergleicher 420 zugeführt werden. Von der logischen Struktur her bekommt der Vergleicher die Gesamtsumme aus der Nachricht sowie ein binäres Signal, das anzeigt, daß die Gesamtsumme gültig ist. Daher ist in Fig. 1 eine Aufteilung der Verbindung 480 in eine Verbindung 481 zur Übermittlung der Signatur und eine Verbindung 482 für die Gesamtsumme symbolisiert. Vorzugsweise wird dies jedoch einfach dadurch codiert werden, daß der Verifikator 410 die Gesamtsumme extrahiert und eine Gesamtsumme von Null ausgibt, wenn keine passende Signatur vorliegt; d.h. eine Gesamtsumme Null zeigt deren Ungültigkeit, eine größer Null deren Gültigkeit an. Wenn die Signatur durch Verschlüsselung einer Nachricht mit Redundanz gebildet ist, kann die Gesamtsumme auch nur durch den Verifikator 410 bzw. den Prüfmodul 400 bereitgestellt werden. Wird hingegen ein Signaturverfahren ohne Verschlüsselung verwendet, bei dem die Gesamtsumme der Freigabenachricht ohne weiteres entnommen werden kann und durch die Signatur lediglich gegen Veränderung, aber nicht gegen Ausspähung, geschützt wird, so kann der Gesamtwert auch von dem Auszahler 310 entnommen und dem Vergleicher 420 zugeführt werden. Der Vergleicher 420 erhält dann nur noch das durch die Verbindung 419 angezeigte Gültigkeitssignal vom Verifikator 410. Dies ist sicherheitstechnisch insofern möglich, als ohnehin der Ausgeber 310 in eine Sicherheits-Abnahme mit einbezogen werden muß.

Der Vergleicher 420 erzeugt ein Sperrsignal 499, das solange anliegt, wie entweder das Gültigkeitssignal 419 fehlt oder die Zielsumme die Gesamtsumme überschreitet. Dieses Sperrsignal 499 wirkt auf eine Sperre 330, welche, wenn aktiviert, wie durch den Pfeil C angedeutet, eine Ausgabe von Wertscheinen durch die Ausgabeöffnung 202 unterbindet. Für die Ausgestaltung der Sperre 330 stehen eine große Anzahl von Alternativen zur Verfügung. So kann es sich um eine elektromagnetisch betätigte Klappe handeln, die lediglich bei Abwesenheit des Sperrsignals geöffnet ist. Dabei kann dann der Verifikator unmittelbar an dem Aktuator der Klappe angeordnet sein, um eine Manipulation des Sperrsignals 499 zu erschweren.

Bevorzugt wird jedoch eine Lösung, bei der der Auszahler ohnehin durch einen Mikrocontroller gesteuert wird. Unmittelbar an dem Mikrocontroller ist eine Aufnahme für eine Chipkarte als Prüfmodul 400 angebracht. Sowohl die Freigabenachricht 480 als auch die Wertzahlen 381 oder deren Summe 483 als auch das Sperrsignal 499 werden über eine einzige physikalische Schnittstelle zur Chipkarte übermittelt, deren Nachrichten durch das Programm des den Auszahler 310 steuernden Mikrocontrollers bestimmt und von ihm ausgewertet werden. Damit ist eine Beeinflussung dieser Verbindung erschwert. Wenn nämlich das Sperrsignal separat vorliegt, dann müßte eine Nachricht von nur einem Bit Informationsgehalt gesichert werden, was bekanntermaßen problematisch ist. Beispielsweise kann die Freigabenachricht eine Transaktionsnummer enthalten und das Sperrsignal invertiert als Freigabesignal, die Transaktionsnummer enthaltend und von dem Prüfmodul mit einem einfachen Signaturverfahren signiert, ausgebildet sein. Daher ist dann die Sperre 330 in den Auszahler 310 integriert, wie durch die Umrahmung 300 in Fig. 1 symbolisiert ist.

Wird eine Transaktionsnummer in der Freigabenachricht verwendet, so wird sie vorzugsweise mit von der Signatur gesichert. Auch andere, hier nicht relevante Information kann mit von der Signatur geschützt werden; das Gültigkeitssignal 419 kann dann auch dem Auszahler 310 und der Steuerung 100 zugänglich gemacht werden.

Anstelle einer Transaktionsnummer aus einer vorab vereinbarten Liste kann auch eine Folgenummer verwendet werden, so daß der Verifikator verlorene und wiederholte Freigabenachrichten als solche erkennen und verwerfen kann. Diese Folgenummer wird mit von der Signatur gesichert.

Eine andere Weiterbildung setzt auch für das Steuerprogramm des Auszahlers 310 eine Chipkarte ein, so dass in Tresor zwei Chipkarten vorhanden sind, die zusammenpassen müssen, um Wertscheine ausgeben zu können.

In der bevorzugten Ausführungsform werden der Verifikator 410, der Vergleicher 420 und der Summierer 430 in den Prüfmodul 400 integriert und als Chipkarte ausgeführt, da diese die notwendige Speicher- und Rechenleistung problemlos erbringen kann. Wie bereits ausgeführt, können aber auch in einer Variante der Erfindung der Summierer 430 und der Vergleicher 420 mit in dem Steuerprogramm des Auszahlers untergebracht sein; insbesondere, wenn dieses versiegelt oder als Chipkarte ausgeführt ist. Dies gilt auch für die Entnahme der Gesamtsumme, wenn die Freigabenachricht lediglich signiert und nicht verschlüsselt ist.

Eine besonders vorteilhafte Weiterbildung besteht darin, daß sowohl zumindest die sicherheitsrelevanten Teile der Steuerung des Auszahlers 310 als auch der Prüfmodul 400 vollständig in einer Chipkarte untergebracht sind. Damit ist die Steuerung innerhalb des Tresors 201 in gleicher Weise durch den Betreiber überwachbar wie die auszugebenden Wertscheine. Insbesondere können Chipkarte und Wertscheine leicht entnommen werden und beispielsweise durch eine Chipkarte für Wartungszwecke ersetzt werden. Der Betreiber der Station muß beim Befüllen lediglich nicht nur die Wertscheine, sondern auch eine von ihm verwahrte Chipkarte bereitstellen, um gegen Manipulationen an der Software gesichert zu sein.

Bislang nicht ausgeführt wurde, wie die genannten Komponenten in einen Anfangszustand bzw. nach Ende eines als Transaktion bezeichneten Ausgabevorgangs rückgesetzt werden. Diese Signale werden üblicherweise durch die Steuerung 100 oder durch Zeitglieder des Auszahlers 310 und des Verifikators 410 ersetzt. Die Techniken hierzu sind jedoch dem Fachmann bekannt, so daß eine weitere Darstellung hier überflüssig erscheint.

Die bisherige Beschreibung ging davon aus, daß mehrere Wertscheine 320 bereitgestellt und dann zusammen ausgegeben werden. Dabei ist auch die Ausgabe eines einzigen Wertscheins logisch enthalten, insbesondere wenn der Wert des Wertscheins gleich dem Gesamtwert ist. Bei dieser gesammelten Ausgabe muß die Freigabenachricht erst unmittelbar vor der Ausgabe durch die Ausgabeöffnung 202 vorliegen; daher können die Zusammenstellung der Wertscheine und die Übermittlung der Freigabenachricht an den Verifikator zeitlich überlappend ablaufen. Für eine inkrementelle Ausgabe muß die Freigabenachricht vor der Ausgabe des ersten Wertscheins vorliegen, um das Sperrsignal zu deaktivieren.

Die Beschreibung verwendet bislang einen Vergleicher, der auf "kleiner oder gleich" vergleicht. Es ist auch möglich, auf Gleichheit allein die Überprüfung zu beschränken. Dies bedeutet eine Erhöhung der Sicherheit, aber auch eine Reduktion der Flexibilität. An der Grundidee der Erfindung ändert sich nichts, so daß ein derartiger Vergleicher als äquivalent anzusehen ist.

Die Erfindung wurde an einer Ausführungsform erläutert, bei der die Freigabenachricht eine Gesamtsumme enthält, die Wertscheine einen einzigen, numerischen Wert haben und deren Summe gebildet wird, um eine Beschränkung oder Begrenzung der Ausgabe zu erreichen. Die Erfindung ist jedoch nicht hierauf beschränkt. So kann die Freigabenachricht mehrere Werte enthalten, beispielsweise in verschiedenen Währungen, und einen Indikator, wie die mehreren Werte zu kombinieren sind, hier als Exklusiv-Oder. Es kann auch ein Gesamtwert in einer Standardwährung zusammen mit den aktuellen, durch den Autorisierungsrechner autorisierten, Wechselkursen angegeben werden, um eine Ausgabe in gemischten Werten zuzulassen. In diesem Fall müssen die ermittelten Wertzahlen 381 um eine Währungsangabe ergänzt werden, die damit allgemein als Wertmerkmale bezeichnet werden können. Die entsprechenden Prozeduren sind dann in dem Vergleicher 420 und den umgebenden Teilen durchzuführen, weshalb sich als verallgemeinerter Begriff der eines Begrenzer-Vergleichers anbietet.

Eine Weiterbildung der Erfindung verwendet eine Verifikator 410, der eine eindeutige Nummer zur Identifizierung enthält. In diesem Fall enthält die Freigabenachricht ferner diese Nummer des Verifikators 410 und sichert sie zusammen mit dem Gesamtwert. Damit ist eine Sicherheit dagegen gegeben, daß eine Freigabenachricht in einer Station benutzt wird, für die sie nicht bestimmt ist.

Entsprechend der Aufgabe der Erfindung spielt die Steuerung 100 keine logisch notwendige Rolle, auch wenn in der Praxis für die Akzeptanz bei Kunden deren Kommunikationsverhalten und Zuverlässigkeit eine große Rolle spielt. In Bezug auf die Erfindung jedoch transportiert die Steuerung lediglich die Freigabenachricht und erzeugt, aus welchen Quellen auch immer, die Ausgabeaufträge. Dabei könnte die Freigabenachricht sogar vollkommen getrennt von der Steuerung, z.B. drahtlos, von dem Autorisierungsrechner übermittelt werden.

Es ist sogar unerheblich, ob die Freigabenachricht von einem bestimmten Autorisierungsrechner auf einem bestimmten Weg den Verifikator erreicht. Daher ist für die Erfindung auch nicht bedeutsam, ob und in welcher Form ein Authentisator 500 mit einem Kartenleser 520 und einem Sicherheitsmodul 510 vorgesehen ist. Entsprechend dem üblicherweise bislang verwendeten System erzeugt der Authentisator 500 eine Nachricht und sendet diese über die Verbindung 580, die den Autorisierungsrechner 601 veranlaßt, eine Freigabenachricht zu erzeugen, oder auch nicht. Alternativ, wenn vielleicht auch nicht für die Ausgabe von Banknoten optimal, kann ein bekanntes biometrisches Authentisierungsverfahren eingesetzt werden, das den Rhythmus einer Tastatureingabe an den Autorisierungsrechner 601 verwendet. Auch können vorbereitete Transaktionsnummern wie beim Home-Banking, wie es bislang mit dem deutschen BTX-System verwendet wird, benutzt werden. Dann ist gar kein Authentisator notwendig, da der Rhythmus der Tastatureingabe jedesmal anders ist bzw. eine Transaktionsnummer nach einer Benutzung ihren Wert verliert.

Insofern ist auch ein Autorisierungsrechner nicht logisch notwendig, wenn die Lösung mit Transaktionsnummern gewählt wird. Hierbei werden in dem Verifikator eine Anzahl von unverbrauchten Transaktionsnummern abgelegt. Für jede Auszahlung gibt der Kunde eine Transaktionsnummer ein, die dann die Signatur in der Freigabenachricht darstellt. Jede in einer Freigabenachricht enthaltene Transaktionsnummer ist eine verallgemeinerte Signatur, die eine Begrenzung sichert, und nach dem Empfang einer Nachricht aus der Liste gestrichen wird. Dabei kann bei jeder Transaktionsnummer der Wert und die Art der Begrenzung vermerkt werden, so daß zwar die Steuerung 100 eine Freigabenachricht erzeugen kann, aber der Verifikator weiterhin sicherstellt, daß die Begrenzung gültig ist, und der Vergleicher sicherstellt, daß die parallel dazu übermittelten Ausgabeanweisungen nur dann ausgeführt werden, wenn der Verifikator eine gültig gesicherte Freigabenachricht erhalten hat.

Die Erfindung wurde für die Ausgabe von Wertscheinen, typischerweise Banknoten, beschrieben. Voraussetzung ist jedoch nur, daß bei der Ausgabe Wertmerkmale, die den auszugebenden Gegenständen zugeordnet sind, automatisch bestimmt, verglichen und ggf. aufsummiert werden können. Beispiele hierfür sind gespeicherte Banknoten und auch Münzen, wobei entweder zuverlässige Verfahren zu deren Wertbestimmung eingesetzt oder die Werte bei Einbringung in den Tresor von der Bedienperson eingegeben werden.

Letzteres kann natürlich auch durch Markierung von z.B. Magazinen erfolgen.

Alternativ kann der Auszahler erst während der Ausgabe den Wert festlegen, wie dies beispielsweise für Eintrittskarten und Gutscheine gilt. Eine multimediale Anwendung kann den Kunden bei der Auswahl des Sitzplatzes für eine Veranstaltung unterstützen und dann erst bei Ausgabe Platznummer und Preis aufdrucken. Damit kann der Auszahler die Summe der Werte der auszugebenden Wertscheine bestimmen, so daß die Erfindung anwendbar bleibt.

Obwohl vorzugsweise zunächst die Wertscheine gesammelt und dann gemeinsam durch die Ausgabeöffnung freigegeben werden, ist auch eine inkrementelle Ausgabe möglich. Dabei ist eine Subtraktion nicht nötig, solange der Wert des auszugebenden Wertscheins so rechtzeitig zu der Summe addiert wird, daß das Sperrsignal mindestens noch die Ausgabe diesen Wertscheins verhindern kann.

Auch kann der Vergleicher selbstverständlich durch einen Subtrahierer gebildet sein, der den Wert des nächsten auszugebenden Wertscheins von dem geprüften Gesamtwert abzieht und so einen Restwert mitführt. Da der Vergleicher ohnehin bevorzugt durch die Programmierung des den Auszahler steuernden Mikrokontrollers realisiert ist, sind eine Vielzahl von Varianten dem Fachmann geläufig. Es sei darauf hingewiesen, daß dieser Mikrokontroller keine direkten Eingaben vom Benutzer erhält; diese Aufgabe übernimmt die oben genannte Steuerung. Denkbar ist lediglich eine finale Freigabetaste, eine Lichtschranke, ein Näherungssensor oder dergleichen.

## Patentansprüche

1. **Station** (10) mit einem Auszahler (310) für Wertscheine (320) und einem in gleichem Maße wie der Auszahler gegen unbefugten Zugriff geschützten Vergleicher (420)
**dadurch gekennzeichnet,**
**dass** ein Verifikator (410) vorhanden ist, der einen Eingang zum Empfang einer Freigabenachricht (480) aufweist, die eine Beschränkung in Form einer oder mehrerer Begrenzungswerte sowie eine Signatur enthält, die die Beschränkung gegen Verfälschung schützt, und eine Einrichtung zur Prüfung der Signatur aufweist, die bei gültiger Signatur eine gültige Beschränkung (482, 419) für den Vergleicher (420) bereitstellt, und ein Auszahler (310) vorhanden ist, der einen Eingang zum Empfang einer oder mehrerer Ausgabeaufträge hat, welche die Ausgabe eines oder mehrerer Wertscheine (320) einleiten und ein Mittel enthält, das Wertmerkmale von den auszugebenden Wertscheinen (320) bestimmt und für den Vergleicher (420) bereitstellt, und der Vergleicher (420) ein Sperrsignal (499) abgibt, solange keine gültige Beschränkung (419) vorliegt oder die Wertmerkmale (381, 483) nicht die Beschränkung (482) erfüllen, wobei das Sperrsignal (499) bewirkt, dass zumindest die die Beschränkung nicht erfüllenden Wertscheine die Station nicht verlassen können.

2. Station nach Anspruch 1, wobei
die Wertmerkmale eine Wertzahl umfassen, die zu einem Begrenzungswert der Freigabenachricht kommensurabel ist, und
- die Wertzahlen der jeweils auszugebenden Wertscheine jeweils zu einer Zielsumme (483) summiert werden und
- der Vergleicher (420) prüft, ob die Beschränkung erfüllt ist, indem er prüft, ob die Zielsumme (483) kleiner ist als der Begrenzungswert (482).

3. Station nach Anspruch 1 oder 2, wobei Verifikator (410), Auszahler (310) und Vergleicher (420) in mindestens gleicher Weise gegen unbefugten Zugriff geschützt sind wie die auszugebenden Wertscheine (320).

4. Station nach einem der Ansprüche 1 bis 3, wobei der Verifikator (410) eine für jeden Verifikator (410) eindeutige Seriennummer in sich gespeichert hat und die Signatur nur dann als gültig angesehen wird, wenn diese Seriennummer auch in der Freigabenachricht enthalten ist.

5. Station nach einem der Ansprüche 1 bis 4, wobei der Verifikator (410) in einem Prüfmodul (400) enthalten ist, der eine Schnittstelle, einen Prozessor und einen Speicher umfaßt und bei dem über die Schnittstelle auf den Speicher nur durch Vermittlung des Prozessors zugegriffen werden kann.

6. Station nach Anspruch 5, wobei das Prüfmodul (400) ferner den Vergleicher (420) umfaßt.

7. Station nach Anspruch 5 oder 6, wobei das Prüfmodul (400) einen Permanentspeicher umfasst, in dem die durchgeführten Auszahlungen aufgezeichnet werden.

8. Station nach einem der Ansprüche 5 bis 7, wobei das Prüfmodul (400) eine Chipkarte ist.

9. Station nach Anspruch 8, wobei der Auszahler (310) eine Steuerelektronik aufweist, an der unmittelbar eine Aufnahme für die Chipkarte angeordnet ist.

10. Station nach einem der vorhergehenden Ansprüche, wobei das Sperrsignal (499) an dem Auszahler anliegt.

11. Station nach einem der Ansprüche 1 oder 2, wobei der Auszahler (410) den Vergleicher (420) umfaßt.

12. Station nach einem der vorhergehenden Ansprüche, wobei sich Teile der Steuerung des Auszahlers in einer Chipkarte befinden.

13. Station nach Anspruch 12, wobei sich die Steuerung des Auszahlers (310) in derselben Chipkarte befindet wie der Verifikator.

14. Station nach einem der vorhergehenden Ansprüche, wobei die zu einer Freigabenachricht gehörenden Wertscheine gesammelt ausgegeben werden.

15. Station nach einem der vorhergehenden Ansprüche, wobei die Wertmerkmale während des Ausgabevorgangs auf die Wertscheine aufgebracht werden.

16. **Verfahren** zum Betrieb einer Station (10) zur Ausgabe von Wertscheinen (320),
**dadurch gekennzeichnet,**
**dass** an einen Verifikator (410) eine Freigabenachricht (480) übermittelt wird, die eine Beschränkung in Form eines oder mehrerer Begrenzungswerte sowie eine Signatur enthält, die die Beschränkung gegen Verfälschung sichert, und der Verifikator (410) daraufhin die Signatur prüft, ob eine gültige Beschränkung vorliegt, und diese an einen Vergleicher (420) überträgt, und dass an einen Auszahler (310) eine oder mehrere Ausgabeaufträge übermittelt werden, der Auszahler (310) daraufhin die Ausgabe eines oder mehrerer Wertscheine (320) einleitet und zu jedem auszugebenden Wertschein ein oder mehrere Wertmerkmale bestimmt und diese an den Vergleicher überträgt, der ein Sperrsignal (499) erzeugt, solange von dem Verifikator (410) keine gültige Beschränkung (482, 419) übertragen wurde oder die von dem Auszahler (310) übertragenen Wertmerkmale (381) nicht der Beschränkung (482, 419) entsprechen, wobei das Sperrsignal (499) bewirkt, dass die durch die Ausgabeaufträge bestimmten Wertscheine am Verlassen der Station gehindert werden.

17. Verfahren nach Anspruch 16, wobei
- die Wertmerkmale eine Wertzahl umfassen, die zu einem Begrenzungswert der Freigabenachricht kommensurabel ist, und
- die Wertzahlen der jeweils auszugebenden Wertscheine jeweils zu einer Zielsumme (430, 483) summiert werden und
- der Vergleicher (420) prüft, ob die Beschränkung erfüllt ist, indem er prüft, ob die Zielsumme (483) kleiner ist als der Begrenzungswert (482).

18. Verfahren nach Anspruch 16 oder 17, wobei jeder Verifikator (410) eine eigene Seriennummer in sich gespeichert hat, die Freigabenachricht (480) eine weitere Seriennummer enthält und im Verifikator (410) die weitere Seriennummer mit der eigenen Seriennummer auf Gleichheit verglichen wird.

19. Verfahren nach einem der Ansprüche 16 bis 18, wobei die Signatur eine kryptographisch gesicherte Prüfsumme ist.

20. Verfahren nach Anspruch 19, wobei die Signatur zusätzlich zu der Beschränkung weiterer Angaben, insbesondere eine Transaktionsnummer, sichert.

## Claims

1. Terminal (10) having a dispenser (310) for vouchers (320) and having a comparator (420) which is protected against unauthorized access to the same extent as the dispenser, **characterized in that** there is a verifier (410) which has an input for receiving an enable message (480) containing a restriction in the form of one or more limiting values and also a signature which protects the restriction against corruption, and has a device for checking the signature, which provides a valid restriction (482, 419) for the comparator (420) if the signature is valid, and there is a dispenser (310) which has an input for receiving one or more dispensing orders initiating the dispensing of one or more vouchers (320), and contains a means which determines value characteristics of the vouchers (320) to be dispensed and provides said value characteristics for the comparator (420), and the comparator (420) outputs an inhibit signal (499) as long as there is no valid restriction (419), or the value characteristics (381, 483) do not satisfy the restriction (482), and the inhibit signal (499) ensuring that at least the vouchers which do not satisfy the restriction cannot leave the terminal.

2. Terminal according to Claim 1, in which the value characteristics comprise a numerical value commensurable to a limiting value in the enable message, and
- the numerical values for the respective vouchers to be dispensed are in each case summed to produce a target sum (483), and
- the comparator (420) checks whether the restriction is satisfied by checking whether the target sum (483) is smaller than the limiting value (482).

3. Terminal according to Claim 1 or 2, in which the verifier (410), the dispenser (310) and the comparator (420) are protected against unauthorized access in at least the same way as the vouchers (320) which are to be dispensed.

4. Terminal according to one of Claims 1 to 3, in which the verifier (410) has a serial number specific to each verifier (410) stored in it, and the signature is regarded as being valid only if this serial number is also contained in the enable message.

5. Terminal according to one of Claims 1 to 4, in which the verifier (410) is contained in a checking module (400) which comprises an interface, a processor and a memory and in which the memory can be accessed via the interface only through the intervention of the processor.

6. Terminal according to Claim 5, in which the checking module (400) also comprises the comparator (420).

7. Terminal according to Claim 5 or 6, in which the checking module (400) comprises a permanent memory which records the disbursements carried out.

8. Terminal according to one of Claims 5 to 7, in which the checking module (400) is a smart card.

9. Terminal according to Claim 8, in which the dispenser (310) has control electronics with a receptacle for the smart card arranged directly on them.

10. Terminal according to one of the preceding claims, in which the inhibit signal (499) is available at the dispenser.

11. Terminal according to one of Claims 1 and 2, in which the dispenser (310) comprises the comparator (420).

12. Terminal according to one of the preceding claims, in which parts of the controller for the dispenser are located in a smart card.

13. Terminal according to Claim 12, in which the controller for the dispenser (310) is located in the same smart card as the verifier.

14. Terminal according to one of the preceding claims, in which the vouchers associated with an enable message are dispensed collectively.

15. Terminal according to one of the preceding claims, in which the value characteristics are applied to the vouchers during the dispensing procedure.

16. Method for operating a terminal (10) for dispensing vouchers (320), **characterized in that**
- an enable message (480) is transmitted to a verifier (410), said enable message containing a restriction in the form of one or more limiting values as well as a signature which secures the restriction against corruption, and the verifier (410) then checks the signature to determine whether there is a valid restriction, and transmits the latter to a comparator (420), and **in that** one or more dispensing orders are transmitted to a dispenser (310), the dispenser (310) then initiates the dispensing of one or more vouchers (320) and determines one or more value characteristics for each voucher which is to be dispensed and transmits said value characteristics to the comparator, which produces an inhibit signal (499) as long as the verifier (410) has not transmitted a valid restriction (482, 419) or the value characteristics (381) transmitted by the dispenser (310) do not correspond to the restriction (482, 419), the inhibit signal (499) ensuring that the vouchers determined by the dispensing orders are prevented from leaving the terminal.

17. Method according to Claim 16, in which
- the value characteristics comprise a numerical value commensurable to a limiting value in the enable message, and
- the numerical values for the respective vouchers to be dispensed are in each case summed to produce a target sum (430, 483), and
- the comparator (420) checks whether the restriction is satisfied by checking whether the target sum (483) is smaller than the limiting value (482).

18. Method according to Claim 16 or 17, in which each verifier (410) has a dedicated serial number stored in it, the enable message (480) contains a further serial number, and the further serial number is compared with the dedicated serial number for equality in the verifier (410).

19. Method according to one of Claims 16 to 18, in which the signature is a cryptographically secured checksum.

20. Method according to Claim 19, in which the signature secures further details, in particular a transaction number, in addition to the restriction.

## Revendications

1. Poste (10) comprenant un élément dit distributeur de paiement (310) pour des bons de valeur (320), ainsi qu'un élément dit comparateur (420) protégé au même titre que le distributeur de paiement, à l'encontre d'un accès non autorisé,
**caractérisé en ce qu'**il dispose d'un élément dit vérificateur (410) qui présente une entrée pour la réception d'une information de validation (480) englobant une restriction sous la forme d'une ou plusieurs valeurs limites, ainsi qu'une signature protégeant la restriction à l'encontre de la falsification, et un dispositif pour la vérification de la signature délivrant, en cas de signature valide, une restriction valide (482, 419) pour le comparateur (420), **en ce qu'**il dispose d'un distributeur de paiement (310) qui possède une entrée pour la réception d'un ou de plusieurs ordres de distribution initiant la distribution d'un ou de plusieurs bons de valeur (320), et renferme un moyen déterminant des caractéristiques de valeur des bons de valeur (320) à distribuer et les mettant à disposition du comparateur (420), et **en ce que** le comparateur (420) délivre un signal de verrouillage (499) aussi longtemps que l'on n'est pas en présence d'une restriction valide (419) ou que les caractéristiques de valeur (381, 483) ne satisfont pas à la restriction (482), le signal de verrouillage (499) empêchant au moins les bons de valeur ne satisfaisant pas à la restriction, de quitter le poste.

2. Poste selon la revendication 1, dans lequel les caractéristiques de valeur comprennent un nombre de valeur qui est commensurable avec une valeur limite de l'information de validation, et
- les nombres de valeur des bons de valeur respectifs à distribuer sont additionnés en une somme cible (483), et
- le comparateur (420) vérifie si la restriction est satisfaite, en vérifiant si la somme cible (483) est inférieure à la valeur limite (482).

3. Poste selon la revendication 1 ou 2, dans lequel le vérificateur (410), le distributeur de paiement (310) et le comparateur (420) sont protégés à l'encontre d'un accès non autorisé, au moins de la même manière que les bons de valeurs (320) à distribuer.

4. Poste selon l'une des revendications 1 à 3, dans lequel le vérificateur (410) possède en mémoire un numéro de série univoque incontestable pour chaque vérificateur (410), et la signature n'est considérée comme valide que lorsque ce numéro de série est également contenu dans l'information de validation.

5. Poste selon l'une des revendications 1 à 4, dans lequel le vérificateur (410) est contenu dans un module de vérification (400) qui englobe une interface, un processeur et une mémoire, et dans lequel il n'est possible d'accéder à la mémoire par l'interface, que par l'entremise du processeur.

6. Poste selon la revendication 5, dans lequel le module de vérification (400) englobe par ailleurs, le comparateur (420).

7. Poste selon la revendication 5 ou 6, dans lequel le module de vérification (400) englobe une mémoire permanente dans laquelle s'inscrivent les paiements effectués.

8. Poste selon l'une des revendications 5 à 7, dans lequel le module de vérification (400) est une carte à circuit intégré.

9. Poste selon la revendication 8, dans lequel le distributeur de paiement (310) comporte une électronique de commande sur laquelle est disposé directement un logement de réception pour la carte à circuit intégré.

10. Poste selon l'une des revendications précédentes, dans lequel le signal de verrouillage (499) est appliqué au distributeur de paiement.

11. Poste selon l'une des revendications 1 ou 2, dans lequel le distributeur de paiement (410) englobe le comparateur (420).

12. Poste selon l'une des revendications précédentes, dans lequel des parties de la commande du distributeur de paiement se trouvent sur une carte à circuit intégré.

13. Poste selon la revendication 12, dans lequel la commande du distributeur de paiement (310) se trouve sur la même carte de circuit intégré que le vérificateur.

14. Poste selon l'une des revendications précédentes, dans lequel les bons de valeur appartenant à une même information de validation sont distribués de manière regroupée.

15. Poste selon l'une des revendications précédentes, dans lequel les caractéristiques de valeur sont appliquées sur les bons de valeur durant l'opération de distribution.

16. Procédé destiné à faire fonctionner un poste (10) de distribution de bons de valeur (320),
**caractérisé en ce que** l'on transmet à un élément dit vérificateur (410), une information de validation (480) qui contient une restriction sous la forme d'une ou de plusieurs valeurs limites ainsi que d'une signature, qui protège la restriction à l'encontre de la falsification, et le vérificateur (410) vérifie ensuite la signature quant à la présence d'une restriction valide et transmet celle-ci à un comparateur (420), et **en ce que** l'on transmet à un distributeur de paiement (310) un ou plusieurs ordres de distribution, le distributeur de paiement (310) initiant ensuite la distribution d'un ou de plusieurs bons de valeur (320) et déterminant pour chaque bon de valeur à distribuer, une ou plusieurs caractéristiques de valeur et les transmet au comparateur qui engendre un signal de verrouillage (499) aussi longtemps que le vérificateur (410) n'a pas transmis de restriction valide (482, 419) ou que les caractéristiques de valeur (381) transmises par le distributeur de paiement (310) ne correspondent pas à la restriction (482, 419), le signal de verrouillage (499) empêchant les bons de valeur déterminés par les ordres de distribution, de quitter le poste.

17. Procédé selon la revendication 16, selon lequel les caractéristiques de valeur comprennent un nombre de valeur qui est commensurable avec une valeur limite de l'information de validation, et
- les nombres de valeur des bons de valeur respectifs à distribuer sont additionnés en une somme cible (430, 483), et
- le comparateur (420) vérifie si la restriction est satisfaite, en vérifiant si la somme cible (483) est inférieure à la valeur limite (482).

18. Procédé selon la revendication 16 ou 17, selon lequel chaque vérificateur (410) possède en mémoire un numéro de série qui lui est propre, l'information de validation (480) renferme un autre numéro de série, et on compare dans le vérificateur (410) ledit autre numéro de série au propre numéro de série pour en vérifier l'égalité.

19. Procédé selon l'une des revendications 16 à 18, selon lequel la signature est une somme de contrôle sécurisée par voie cryptographique.

20. Procédé selon la revendication 19, selon lequel la signature en plus de la restriction, sécurise d'autres indications, notamment un numéro de transaction.
